# EUROPEAN PATENT APPLICATION

(11) **EP 0 940 733 A1**
(43) Date of publication of application: **08.09.1999**
(21) Application number: 98943051.7
(22) Date of filing: 18.09.1998
(51) Int. Cl.: G03G 21/00, H04N 1/00

(54) **IMAGING APPARATUS**

(30) Priority: 19.09.1997 JP 25580197
(71) Applicant: KABUSHIKI KAISHA TOSHIBA, Kawasaki-shi, Kanagawa-ken 210-8572 (JP)
(72) Inventor: SUEHIRO, Tatsuo, Hino-shi Tokyo 191-0011 (JP)
(74) Representative: Blumbach, Kramer & Partner GbR
(86) International application number: JP9804222
(87) International publication number: WO9915937

(57) **Abstract**

Setting is done such that a facsimile operation can be reserved with priority over a copying function in response to an interrupt generated when a user operates a control panel (91), so shift from the facsimile function to a normal mode can be completed.

## Description

### Technical Field

The present invention relates to a composite image forming apparatus having a digital copying function, facsimile function, and printer function, and a function of switching between a preheat mode and normal mode for these functions.

### Background Art

Composite image forming apparatuses having a digital copying function, facsimile function, and printer function have been widely used. In such a composite image forming apparatus, a printer, e.g., is used as a common resource for executing the digital copying function, facsimile function, and printer function.

The printer commonly used to execute these functions has a large power consumption for the purpose of toner fixing. For this reason, not only at night but also in the daytime, when an inoperative state has continued for a predetermined time, the normal mode shifts to a sleep mode or a preheat mode.

Shift to the preheat mode is done when the predetermined time is measured using a timer or an operator operates a preheat key to set the preheat mode.

The image forming apparatus of this type such as an image processing apparatus described in, e.g., Jpn. Pat. Appln KOKAI Publication No. 9-8968 is set to give priority on the digital copying function among the digital copying function, facsimile function and printer function. Hence, when operation of returning the mode from the sleep or preheat mode to the normal mode is performed, normally, the digital copying function is started, and a window for the copying function is displayed on the operation panel. In this state, when an original to be copied is set on the original tray, and the start key is depressed, a window indicating reservation of copying operation is displayed. Even when the user wants, e.g., facsimile transmission, the function switching operation is rejected in the preheat mode, and the user must wait until the normal mode is restored.

It is therefore an object of the present invention to provide a convenient image forming apparatus, which is set to allow reception of reservation of not only a digital copying function but also a facsimile function or printer function even in a preheat mode.

### Disclosure of Invention

An image forming apparatus of the present invention comprises image forming means for forming an image on an image carrier, first job execution means using the image forming means, means for switching an operation mode of the first job execution means from a normal mode to a preheat mode, means for canceling the preheat mode to start shift to the normal mode when the preheat mode is set, means for accepting an operation request of second job execution means during shift to the normal mode, and means for canceling the preheat mode in accordance with the operation request of the second job execution means to execute a second job.

An image forming apparatus of another aspect of the present invention comprises copying function execution means having original image reading means for reading an original image and forming an image data, image forming means for forming an image on an image carrier on the basis of the image data, and means for fixing the image formed on the image carrier on a paper sheet, reception means for receiving image data from an external device, means for switching an operation mode of the copying function execution means from a normal mode to a preheat mode, means for setting priority of use of the image forming means for the copying function execution means over facsimile function execution means, interrupt means for generating an interrupt for executing a facsimile function during executing the preheat mode, means for changing job execution setting by the copying function means to reservation setting for executing the facsimile function in response to generation of the interrupt, and means for restoring job execution by the copying function execution means after the facsimile function is executed upon generation of the interrupt.

With the above arrangement, an image forming apparatus set to accept reservation not only for a digital copying function but also for a facsimile function even in the preheat mode can be provided.

### Brief Description of Drawings

FIG. 1 is a sectional view of a composite digital copying machine according to an image forming apparatus of the present invention;
FIG. 2 is a view showing the system configuration of the image forming apparatus shown in FIG. 1;
FIG. 3 is a block diagram showing the arrangement of a scanner shown in FIG. 2;
FIG. 4 is a block diagram showing the arrangement of a fundamental CPU shown in FIG. 2;
FIG. 5 is a block diagram showing the arrangement of a printer shown in FIG. 2;
FIG. 6 is a block diagram showing the arrangement of a facsimile apparatus shown in FIG. 2;
FIG. 7 is a view showing the arrangement of an operation panel shown in FIG. 2;
FIG. 8 is an enlarged view showing a part of the operation panel shown in FIG. 7;
FIG. 9 is a flow chart for explaining an operation of canceling a preheat mode in accordance with operation of a copy start key or preheat key in the preheat mode;
FIG. 10 is a flow chart for explaining interrupt operation of a facsimile function to a copy function in shift from the preheat mode to normal mode; and
FIG. 11 is a flow chart showing processing of the job management task for switching the copying function and facsimile function in canceling preheat.

### Best Mode of Carrying Out the Invention

The embodiment of the present invention will be described below with reference to the accompanying drawings.

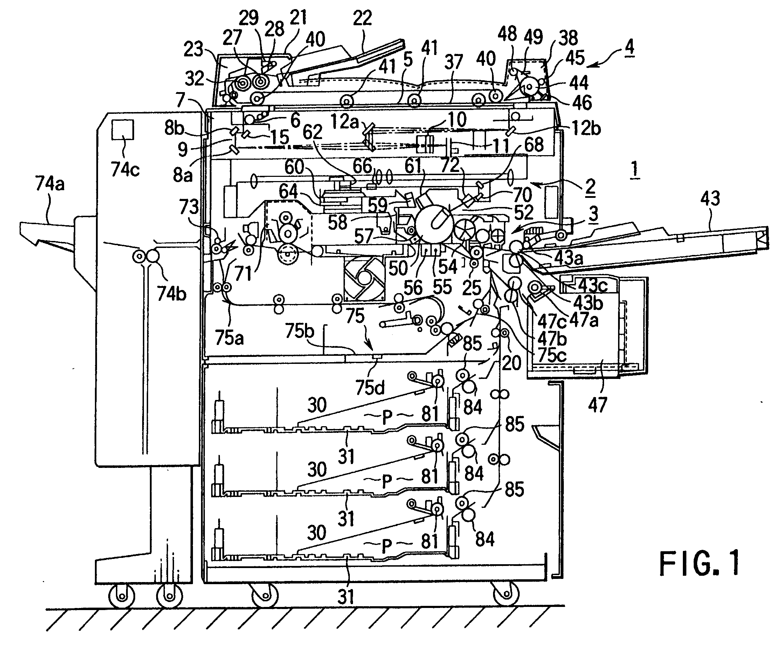

FIG. 1 schematically shows the overall arrangement of a digital copying machine as an image forming apparatus according to the present invention. A digital copying machine 1 comprises a scanner 2 and a printer (laser engine) 3, and an automatic document feeder (ADF) 4 at the top of the machine 1.

In the automatic document feeder 4, the rear edge portion of a cover main body 21 as a housing is attached to the rear edge portion of the upper surface of the machine main body through a hinge device (not shown) to freely open/close. The upper surface of the original table 5 can be opened by pivotally displacing the entire automatic document feeder 4 as needed.

An original feeding table 22 capable of holding a plurality of originals at once is arranged at a portion slightly on the right side of the upper surface of the cover main body 21. On one end side of the machine, a feeding means 23 for sequentially picking up originals and supplying them to one end side (left end side in FIG. 1) of the original table 5 one by one is arranged. The feeding means 23 has a pickup roller 27 for extracting an original, a weight plate 28 for pressing the original against the pickup roller 27, an empty sensor 29 as an original sensor for detecting the original set state on the original feeding table 22. A feed roller 32 is disposed in the original pickup direction of the pickup roller 27, so originals are properly fed one by one.

An original conveyor belt 37 covering the upper surface of the original table 5 is stretched above the original table 5. The original conveyor belt 37 is formed as a wide endless belt having a white outer surface and looped between a pair of belt rollers 40 and can be driven in the forward and reverse directions by a belt driving mechanism (not shown). A plurality of belt press rollers 41 for pressing the belt surface against the original table 5 and a set switch (not shown) for detecting the open/closed state of the automatic document feeder 4 are arranged on the inner surface side of the original conveyor belt 37.

An original fed by the feeding means 23 is conveyed from one end side (left end side) to the other end side (right end side) of the original table 5. A delivery means 38 is disposed on the right side of the machine. The delivery means 38 has a conveyor roller 44, a pinch roller 45 for pressing an original against the conveyor roller 44, a delivery sensor 46 as an original detection means for detecting the trailing edge of the original sent in the delivery direction, and the like. A delivery roller 48 is arranged on the downstream side of the original delivery path. Since the original delivery path has a gate 49 for turning an original over and guiding it to the original table 5, both surfaces of the original can be copied.

The scanner 2 as a reading means comprises an exposure lamp 6 as a light source, a first carriage 7 having a mirror 15, a second carriage 9 having mirrors 8a and 8b for changing the direction of the optical path, a lens 10, a CCD sensor 11 for receiving reflected light from an original, a driving system (not shown) for changing the positions of these members, and an A/D conversion section (not shown) for converting the output, i.e., image data (information) from the CCD sensor 11 from analog data to digital data. The first and second carriages 7 and 9 are connected through a timing belt (not shown), and the second carriage 9 moves at a speed 1/2 that of the first carriage 7 in the same direction as that of the first carriage 7. With this arrangement, scanning can be performed while maintaining an optical path length to the lens 10 constant. The lens 10 with a fixed focal length is moved along the optical axis to change the magnification. One pixel of an original corresponds to one element of the CCD sensor 11. The output signal from the CCD sensor 11 is output to the A/D conversion section. The first and second carriages 7 and 9 and mirrors 12a and 12b are moved by stepping motors (not shown), respectively. The first and second carriages 7 and 9 are moved in accordance with an operation of the timing belt (not shown) looped between a drive pulley (not shown) and an idle pulley (not shown) which, are coupled to the rotating shafts of the stepping motors. The lens 10 is moved along the optical axis in accordance with movement of a spiral shaft (not shown) which is rotated by a corresponding stepping motor (not shown).

Reference numeral 60 denotes a laser diode. A collimator lens 62, a polygon mirror (polyhedral reflecting mirror) 64, a lens 66, reflecting mirrors 68 and 70, and a lens 72 are arranged in correspondence with the laser diode 60 so as to irradiate a photo-sensitive drum 50 with a laser beam from an exposure unit 52.

The printer 3 as an image forming means is constructed by combining, e.g., a laser optical system and an electrophotographic system capable of forming an image on transfer paper. More specifically, the printer 3 has the photosensitive drum 50 as an image carrier axially and rotatably supported at almost the central portion in the machine. An exposure unit 52, a developing unit 54, a transfer charger 55, a separation charger 56, a cleaning pre-discharger 57, a cleaner 58, a discharge lamp 59, and a charger 61 are sequentially arranged around the photosensitive drum 50. The photosensitive drum 50 is uniformly charged by the charger 61. The scanner 2 outputs a laser beam to form an original image on the photosensitive drum 50 as an electrostatic latent image.

The electrostatic latent image formed on the photosensitive drum 50 is developed by the developing unit 54. The developed image is transferred by the transfer charger 55 onto a copy paper sheet (target image forming medium) P fed from a feed cassette 30 as a feeding means (to be described later) through a feed roller 20 and an aligning roller 25. The copy paper sheet P on which the developed image is transferred by the transfer charger 55 is separated by AC corona discharging by the separation charger 56 and conveyed to a fixing device 71 through a conveyor belt. The copy paper sheet P on which the developed image is fused and fixed by the fixing device 71 is delivered to a unit 74 having a delivery tray 74a by a delivery roller pair 73. The unit 74 has a roller pair 74b for facing down the copy paper sheet P delivered from the delivery roller pair 73, and, at the upper portion of the unit 74, a stapler 74c for stapling copies in units of copies in a staple sort mode.

After the developed image is transferred to the copy paper sheet P and the copy paper sheet P is separated, charges on the photosensitive drum 50 are removed by the cleaning pre-discharger 57, and the developing agent remaining on the photosensitive drum 50 is removed by the cleaner 58. The potential on the photosensitive drum 50 is set at a predetermined level or less by the discharge lamp 59 to allow the next copying operation.

In a double-side copying mode in which both surfaces of the copy paper sheet P are printed, the copy paper sheet P on which a developed image has been fused and fixed by the above-described fixing device 71 is conveyed through a conveyor path 75a and stored on a tray 75b. The paper sheet P with one surface printed, which is stored on the tray 75b, is conveyed to the above-described transfer charger 55 through a conveyor path 75c to transfer a developed image on the other unprinted surface. A light-reflection-type paper sensor 75d is set at the lower portion of the tray 75b to detect the presence/absence of paper stacked on the tray 75b.

The conveyor path 75a, tray 75b, conveyor path 75c, and paper sensor 75d construct an automatic double-side device (ADD) 75 as an automatic double-side reversing mechanism.

Referring to FIG. 1, reference numeral 30 denotes a plurality of feed cassettes as feeding means detachably inserted from the front side of the machine main body 1 and stacked in the vertical direction. The feed cassette 30 comprises a cassette case 31 as a case for storing the copy paper sheets P. The extraction end portion of the cassette case 31 is tilted in the paper extraction direction. The copy paper sheets P stored in the cassette case 31 of the feed cassette 30 are picked up by a pickup roller 81 and extracted from the uppermost portion. The copy paper sheets P picked up by the pickup roller 81 and fed to the extraction end portion of the cassette case 31 are separated one by one by a paper separation section comprising a feed roller 84 and a separation roller (or separation pad) 85 set above and inside the extraction end portion of the cassette case 31 and conveyed to the printer 3.

A feed cassette 43 and large-capacity feeding device (LCF) 47 are detachably attached to the right side of the machine main body. The copy paper sheets P stored in the feed cassette 43 are picked up from the uppermost sheet by a pickup roller 43a and extracted. The copy paper sheets P picked up by the pickup roller 43a and fed to the extraction end portion of the feed cassette 43 are separated one by one by a paper separation section comprising a feed roller 43b and a separation roller 43c set above and inside the extraction end portion of the feed cassette 43 and conveyed to the printer 3. The copy paper sheets P stored in the LCF 47 are picked up from the uppermost sheet by a pickup roller 47a and extracted. The copy paper sheets P picked up by the pickup roller 47a and fed to the extraction end portion of the LCF 47 are separated one by one by a paper separation section comprising a feed roller 47b and a separation roller 47c set above and inside the extraction end portion of the LCF 47 and are conveyed to the printer 3.

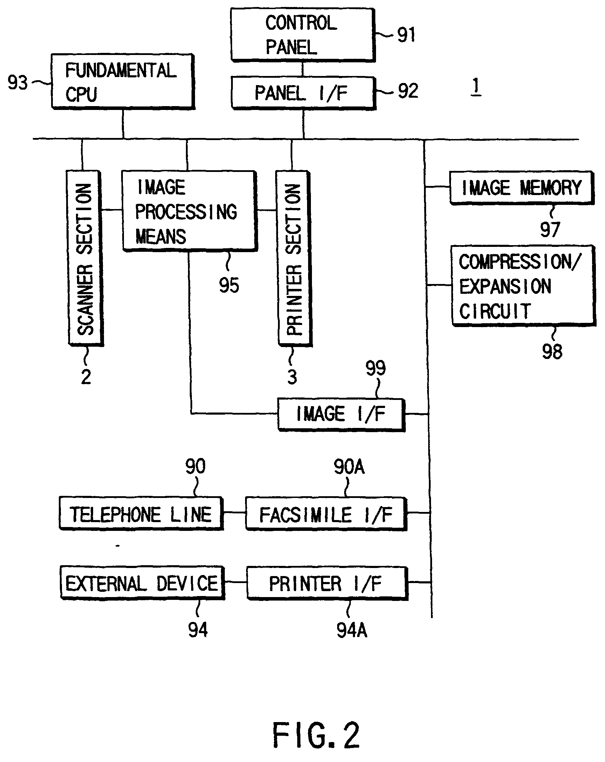

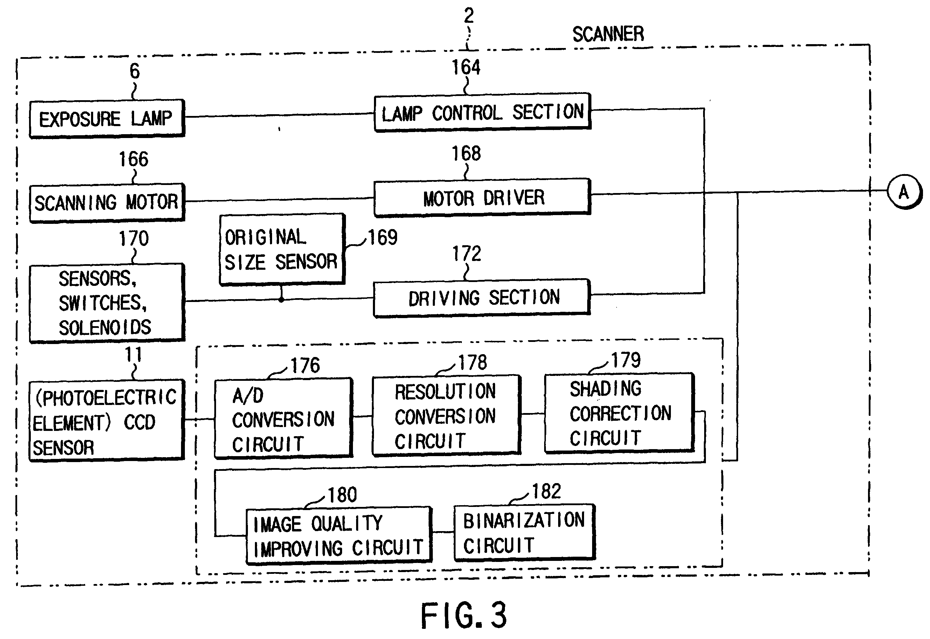

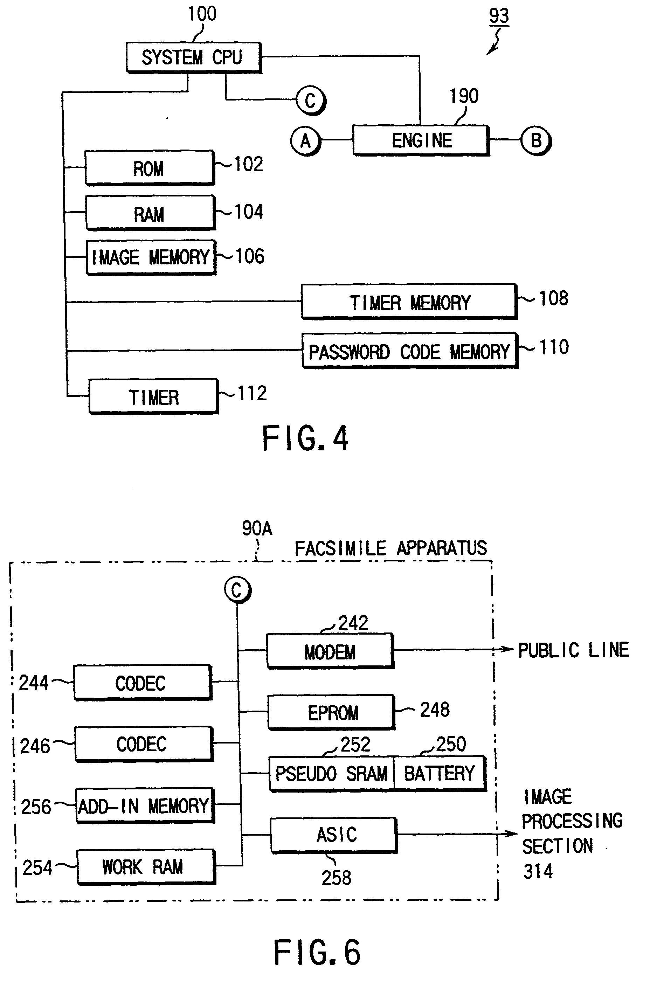

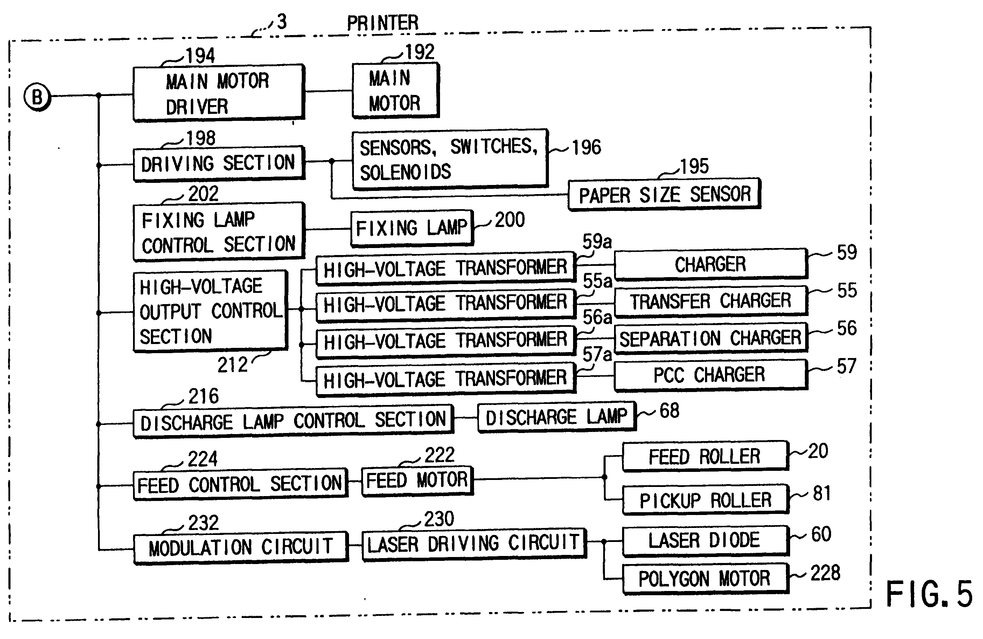

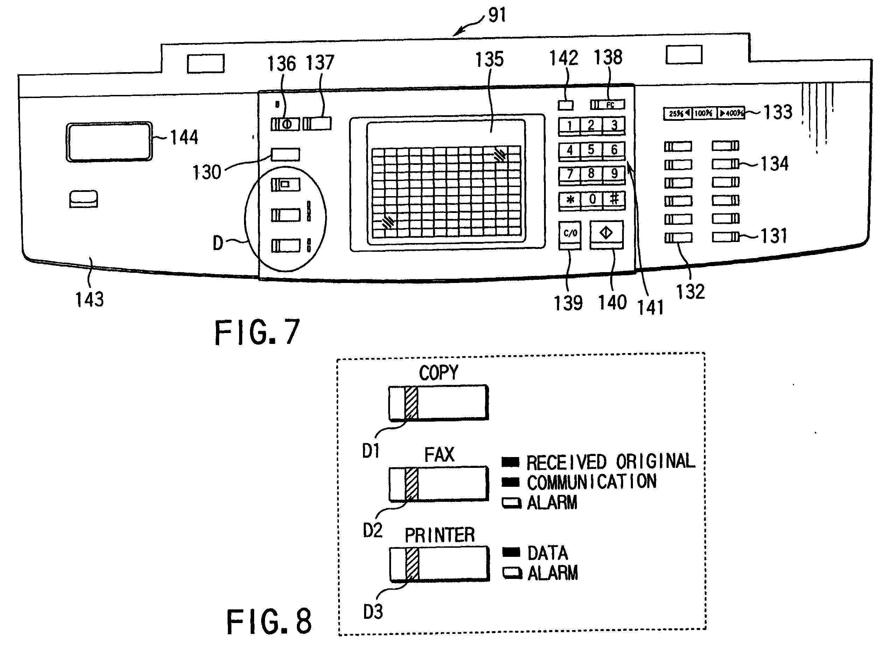

The control system of the digital copying machine 1 will be described with reference to FIGS. 2 to 6. FIG. 2 shows the overall arrangement of the control system of the digital copying machine 1 having a copying function, facsimile function, and printer function. FIG. 3 shows the scanner 2. FIG. 4 shows a fundamental CPU 93. FIG. 5 shows the printer 3. FIG. 6 shows a facsimile apparatus 90A.

In the control system of the digital copying machine 1 shown in FIG. 2, to execute the copying function, the scanner section 2 is controlled by the fundamental CPU 93 to read an original using a control panel 91 through a panel I/F 92, and printing is performed by the printer section 3 through an image processing means 95. The use right of the printer section 3 is switched between the copying function, facsimile function, and printer function in units of pages.

A reception original data received from a telephone line 90 by facsimile is sent to a compression/expansion circuit 98 through the facsimile apparatus 90A. The code-converted reception data is stored in an image memory 97 acting as a page memory. To print the received facsimile original data, after it is confirmed on the basis of the job management program of the fundamental CPU 93 that the printer section 3 is not used, the image processing means 95 also serving as an image forming resource, the printer section 3 and the image memory 97 are used through an image I/F 99.

In a printer job, print data from an external device 94, e.g., a personal computer (PC), is stored in the image memory 97 through a printer I/F 94A. The job of the printer 3 confirms on the basis of the job management program of the fundamental CPU 93 that the printer section 3 is not used and then uses the image forming resources 95, 3 and the image memory 97 through the image I/F 99.

The scanner 2 has an arrangement shown in FIG. 3. An engine CPU 190 shown in FIG. 4 is connected to a lamp control section 164 for controlling the exposure lamp 6 in the scanner 2, a motor driver 168 for controlling a scanning motor 166, and a driving section 172 for controlling sensors, switches, and solenoids 170 including an original size sensor 169 so as to control these sections. The engine CPU 190 is also connected to an A/D conversion circuit 176, resolution conversion circuit 178, shading correction circuit 179, image quality improving circuit 180, and binarization circuit 182, all of which perform image processing of image information from the CCD sensor 11 as a photoelectric element. The engine CPU 190 controls these circuits.

The fundamental CPU 93 as a control means has an arrangement shown in FIG. 4. A system CPU 100 is connected to a ROM 102, a RAM 104, an image memory 106, a timer memory 108, a password code memory 110, and a timer 112.

The system CPU 100 is also connected to the engine CPU 190 and facsimile apparatus 90A. The engine CPU 190 controls the scanner 2 and printer 3.

The printer 3 will be described next in detail with reference to FIG. 5. The engine CPU 190 is connected to a main motor driver 194 for driving a main motor 192 of the printer 3, a driving section 198 for driving/controlling sensors, switches, and solenoids 196 including a paper size sensor 195, a fixing lamp control section 202 for controlling a fixing lamp 200 of the fixing device 71, a high-voltage output control section 212 for controlling the charger 59, transfer charger 55, separation charger 56, and PCC charger 57, a discharge lamp control section 216 for controlling the discharge lamp 58, a feed control section 224 for controlling a feed motor 222 for the feed roller 20 and pickup roller 81, and a modulation circuit 232 for controlling a laser driving circuit 230 for the laser diode 60 and polygon motor 228. The engine CPU 190 controls the connected sections. High-voltage transformers 59a, 55a, 56a, and 57a are inserted between the high-voltage output control section 212 and the charger 59, transfer charger 55, separation charger 56, and PCC charger 57, respectively.

The facsimile apparatus 90A as a facsimile transmission and reception means will be described with reference to FIG. 6. The facsimile apparatus 90A is connected to a public line, e.g., a telephone line and comprises a modem 242 as a modulation/demodulation unit for connecting an analog line, CODECs 244 and 246 as coding/decoding units for binary image data, an EPROM 248 for a communication control program, a pseudo SRAM 252 serving as an image data storage means backed up by a battery 250, a work RAM 254 used to perform various image data processing operations, an add-in memory 256, and an interface ASIC 258 for outputting facsimile reception data to an image processing section 314.

FIG. 7 shows the arrangement of the operation panel 91 as an operation means. The operation panel 91 has a HELP key 130, an automatic paper selection key 131, an automatic magnification selection key 132, a zoom/100% key 133, paper size keys 134, an LCD panel 135, a preheat key 136, an interrupt key 137, an all clear key 138, a clear/stop key 139, a start key 140, a ten-key pad 141, a pause key 142, a total counter indicator 143, a clip tray 144, and the like.

Three indicators encircled by a circle D comprise an indicator D1 for indicating the copy state, an indicator D2 for indicating the presence of a facsimile reception original, a communicating state, and an alarm operating state, and an indicator D3 for indicating the presence of printer data and an alarm state, as shown in FIG. 8.

The LCD panel 135 indicates the state of the copying machine by blinking/displaying various icons or characters.

When the HELP key 130 is depressed as an operation guide key, a message representing the operation procedure is displayed on the LCD panel 135. When the HELP key 130 is depressed after functions are set, the set contents can be confirmed on the LCD panel 135.

The automatic paper selection key 131 is normally set in an automatic paper selection mode. The size of an original set on the original table (glass) 5 is automatically detected, and paper sheets having the same size as that of the original are automatically selected (for only a copy magnification of x1).

When the automatic magnification selection key 132 is depressed to select an automatic magnification selection mode and set a desired paper size, the size of an original set on the original table (glass) 5 is detected, and the copy magnification is automatically calculated.

When the "25% <" key at the left end of the zoom/100% key 133 is depressed, the copy magnification decreases to 25% in units of 1%. When the "> 800%" key at the right end is depressed, the copy magnification increases to 800% in units of 1%. When the "100%" key at the center is depressed, the copy magnification returns to "x1" (100%).

The paper size key 134 is used to select a paper size.

The LCD panel 135 displays the state of the digital copying machine 1, operation procedure, and various instructions for the user as characters and icons. The LCD panel 135 as a display means also incorporates a touch panel to allow function setting.

When the preheat key 136 is depressed, a preheat (power saving) mode is set, and all indicator lamps are turned off. To set the copy mode again, this button is depressed again.

The interrupt key 137 is used for an interrupt copy during continuous copying or interrupt of a facsimile job in a copy job (to be described later).

When the all clear key 138 is depressed, all selected modes are cleared, and the initial state is restored.

The clear/stop key 139 is used to correct the number of copies or stop the copying operation.

The start key 140 is depressed to start copying or restore the preheat mode to the normal mode.

The ten-key pad 141 is used to set the number of copies. The number of copies can be set within the range of 1 to 999.

The pause key 142 is an operation button for inserting a pause between dial inputs in ten-key input, for the facsimile operation.

The total counter indicator 143 indicates the total copy volume after machine setting.

The clip tray 144 is a place where clips taken off from originals to be copied are placed and has a magnet.

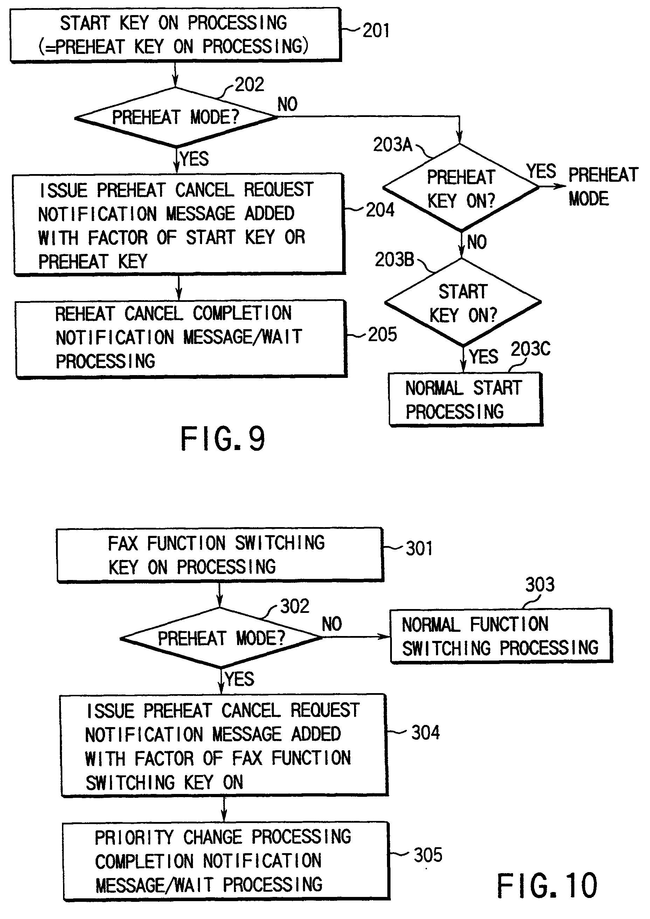

The operation of the embodiment of the present invention will be described below in detail with reference to FIGS. 9 to 11.

In this embodiment, when the preheat mode is set, priority is given to the copying function. In the preheat mode, when the user sets originals on the original table and depresses the start key 140 or preheat key, a window for execution of the copying function is displayed on the LCD panel 135.

Referring to FIG. 9, in this state, when the start key 140 or preheat key 136 is depressed in step 201, it is checked in step 202 whether the preheat mode is being set. If NO in step 202, it is checked in step 203A whether the preheat key 136 has been depressed. If YES in step 203A, the preheat mode is set. If NO in step 203A, it is checked in step 203B whether the start key 140 has been depressed. If YES in step 203B, and the preheat mode is not set, the copying operation in the normal copy mode is started in step 203C.

If it is determined in step 202 that the preheat mode is being set, a notification message representing a reservation cancel request is sent to the fundamental CPU 93 together with operation information of the start key 140 or preheat key 136 in step 204. The operation information of the start key 140 is used to instruct the start of the copying function.

In step 205, a message received from the CPU 93 for job management upon canceling preheat is processed, and a wait state is set. In this wait state, when a preheat cancel completion notification message representing that the preheat mode has been restored to the normal mode is issued, the copying operation reserved by operating the start key 140 when the preheat mode is being restored to the normal mode is started.

On the other hand, when a facsimile function switching key is operated on the LCD panel 135, the processing is performed by the CPU 93 in step 301 in FIG. 10. In step 302, it is checked whether the preheat mode is being set.

In the normal mode, the normal function switching processing from the copying function to the facsimile function is performed in step 303. In the preheat mode, a preheat cancel request notification message is issued in step 304 and sent to the CPU 93 together with operation information of the facsimile function switching key. Upon receiving them, the CPU 93 receives an interrupt and switches the display to the facsimile window to allow reservation of a facsimile operation when the preheat mode is changing to the normal mode.

More specifically, in step 305, processing of changing the priority from the copying function to the facsimile function is performed, and a message received from job management is processed to set an operation wait state. In this state, when the preheat mode has been restored to the normal mode, the facsimile transmission operation reserved during the facsimile function wait state is started.

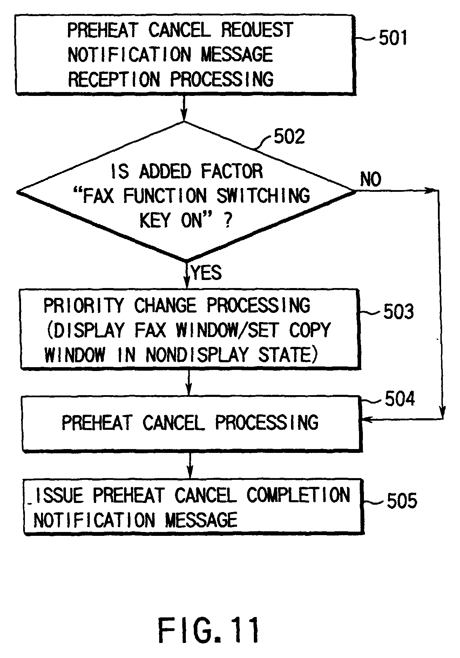

FIG. 11 explains contents of processing of job management task of the CPU 93 in the operation shown in FIGS. 9 and 10. In step 501, when a preheat cancel message is received, reception processing is performed. In step 502, it is checked whether information added to the preheat cancel request notification message is operation information of the facsimile function switching key. If YES in step 502, priority change processing is performed to start the facsimile function in step 503. As a result, a facsimile window is displayed on the LCD panel 135, and the copy window which has been displayed so far is set in the non-display state.

When it is determined in step 502 that the added information is the operation information of the start key 140 or preheat key 136, preheat cancel processing is performed in step 504. Upon ending processing in step 503 as well, the flow advances to step 504 to perform preheat cancel processing.

When preheat cancel is complete, a preheat cancel completion notification message is issued in step 505. The mode shifts to the normal mode to start the reserved copying operation or facsimile transmission operation.

In the above-described embodiment, priority is given to the copying function, and the function is switched to the facsimile function and reservation is performed in response to an interrupt. However, priority settings may be reversed. Alternatively, priority may be selectively set among three functions including the printer function to freely set reservation in response to an interrupt upon shifting from the preheat mode to the normal mode.

As has been described above in details, according to the present invention, in the preheat mode set by operating, e.g., the preheat key or in accordance with the elapse of a predetermined inoperative time, when the copying operation is performed during canceling preheat, copying is reserved. When the facsimile function key is operated in the preheat mode, the copy mode is interrupted to allow the facsimile transmission reservation operation. Since the reservation can be directly canceled in a desired function to shift the preheat mode to the normal mode, a desired function can he reserved without waiting for completion of shift from the copy mode to the normal mode, unlike the prior art. Hence, a convenient image forming apparatus can be provided.

## Claims

1. An image forming apparatus characterized by comprising:
image forming means for forming an image on an image carrier;
first job execution means using said image forming means;
means for switching an operation mode of said first job execution means from a normal mode to a preheat mode;
means for canceling the preheat mode when the preheat mode is being set to start shift to the normal mode;
means for receiving an operation request of second job execution means during shift to the normal mode; and
means for canceling the preheat mode in accordance with the operation request of said second job execution means to execute a second job.

2. An image forming apparatus according to claim 1, characterized in that the first job is a copying function, and the second job is a facsimile transmission function.

3. An image forming apparatus according to claim 1, characterized in that said means for switching the operation mode of said first job execution means from the normal mode to the preheat mode comprises a timer for measuring that an inoperative state has continued for a predetermined time, and means for switching the operation mode to the preheat mode in accordance with an output from said timer or operation of a preheat key.

4. An image forming apparatus according to claim 1, characterized in that said means for starting shift from the preheat mode to the normal mode comprises means for detecting that a preheat key, a copy start key, or a facsimile function switching key has been depressed.

5. An image forming apparatus according to claim 2, characterized by further comprising means for, upon detecting that the facsimile function switching key has been depressed, switching priority from the copying function to the facsimile function.

6. An image forming apparatus characterized by comprising:
copying function execution means having original image reading means for reading an original image and forming an image data, image forming means for forming an image on an image carrier on the basis of the image data, and means for fixing the image formed by the image carrier on a paper sheet;
reception means for receiving image data from an external device;
means for switching an operation mode of said copying function execution means from a normal mode to a preheat mode;
means for setting priority of use of said image forming means for said copying function execution means over facsimile function execution means;
interrupt means for generating an interrupt for executing a facsimile function during executing the preheat mode;
means for changing job execution setting by said copying function means to reservation setting for executing the facsimile function in response to generation of the interrupt; and
means for restoring job execution by said copying function execution means after the facsimile function is executed upon generation of the interrupt.

7. An image forming apparatus according to claim 6, characterized in that said means for switching the operation mode of said first job execution means from the normal mode to the preheat mode comprises a timer for measuring that an inoperative state has continued for a predetermined time, and means for switching the operation mode to the preheat mode in accordance with an output from said timer or operation of a preheat key.

8. An image forming apparatus according to claim 6, characterized in that said means for starting shift from the preheat mode to the normal mode comprises means for detecting that a preheat key, a copy start key, or a facsimile function switching key has been depressed.

9. An image forming apparatus according to claim 6, characterized by further comprising means for, upon detecting that the facsimile function switching key has been depressed, switching priority from the copying function to the facsimile function.

10. An image forming apparatus according to claim 8, characterized by further comprising means for, upon detecting that the preheat key, the copy start key, or the facsimile function switching key as means for starting shift from the preheat mode to the normal mode has been depressed, determining whether the preheat mode or the normal mode is set, means for, when it is determined that the preheat mode is set, generating information representing the operated key together with a preheat cancel request, and means for receiving the information and determining whether the preheat mode is to be shifted to the normal mode or a facsimile mode.

11. An image forming apparatus characterized by comprising:
image forming means for forming an image on an image carrier;
facsimile means for performing a facsimile operation;
means for switching an operation mode of said image forming means from a normal mode to a preheat mode; and
cancel means for, when the preheat mode is being set, canceling the preheat mode and allowing operation of said facsimile means.

12. An image forming apparatus according to claim 11, characterized in that said cancel means comprises a facsimile mode setting key.
